# EUROPÄISCHE PATENTSCHRIFT

(11) **EP 0 850 993 B1**
(45) Veröffentlichungstag und Bekanntmachung des Hinweises auf die Patenterteilung: **02.05.2003**
(21) Anmeldenummer: 97122118.9
(22) Anmeldetag: 15.12.1997
(51) Int. Cl.: C08L 81/04, C08L 81/06, C08L 27/12

(54) **Verfahren zur Herstellung einer Mischung aus Fluorpolymeren, oxidierten Polyarylensulfiden und Polyarylensulfiden**
Process for the preparation of blends of fluoropolymers, polyarylenesulphides and oxidized polyarylenesulphides
Procédé de préparation de mélanges de fluoropolymères, poly(sulfures d'arylene) et poly(sulfures d'arylene) oxidés

(30) Priorität: 23.12.1996 DE 19654102
(43) Veröffentlichungstag der Anmeldung: 01.07.1998
(73) Patentinhaber: Ticona GmbH, 65451 Kelsterbach (DE); Venus GmbH, 89520 Heidenheim (DE)
(72) Erfinder: Scheckenbach, Helmut, DI., 63225 Langen (DE); Büche, Gregor, Ing., 89520 Heidenheim (DE)

(56) Entgegenhaltungen:
- EP-A- 0 633 291
- EP-A- 0 668 324
- EP-A- 0 710 702
- EP-A- 0 791 664
- EP-A- 0 801 109
- DE-A- 2 531 404
- DE-A- 4 200 385

## Beschreibung

Die Erfindung betrifft ein Verfahren zur Herstellung von Formkörpern aus Mischungen aus Fluorpolymeren, oxidierten Polyarylensulfiden und Polyarylensulfiden und die Verwendung dieser Formkörper.

Mischungen aus Fluorpolymeren mit oxidierten Polyarylensulfiden sind bekannt (DE 43 23 181, DE 43 23 121, EP-A-710 702). Unter oxidierten Polyarylensulfiden sind vollständig oder teilweise oxidierte Polyarylensulfide zu verstehen, das sind Polyarylensulfide oder Verbindungen, die in der Molekülkette neben S- auch SOund/oder SO₂-Brückenglieder enthalten. Diese Verbindungen stellen statistische Copolymere dar. Ein Nachteil dieser Mischungen ist, daß bei zunehmendem Gewichtsanteil von oxidierten Polyarylensulfiden in den Mischungen oder bei der Herstellung großvolumiger Bauteile Verarbeitungsprobleme auftreten. Insbesondere kommt es zu Ausgasungen der oxidierten Polyarylensulfide, die zu Rissen im Bauteil führen. Dass auch Formteile aus reinen Polyarylensulfonen zur Rissbildung neigen, ist aus der EP-A-668 324 bekannt. Dort wurde dieses Problem gelöst, indem man Mischungen aus Polyarylensulfonen mit Polyarylensulfoxiden und/oder Polyarylensulfiden verwendete, die sich zu rissfreien Formkörpern verarbeiten lassen.

Aufgabe der Erfindung ist es, die genannten Nachteile der Mischungen aus Fluorpolymeren mit oxidierten Polyarylensulfiden zu vermeiden.

Die Erfindung betrifft ein Verfahren zur Herstellung rissfreier Formkörper aus einer Polymermischung, enthaltend
A) mindestens ein Fluorpolymer in einem Anteil von 0,5 bis 99 Gew.-%
B) mindestens ein oxidiertes Polyarylensulfid in einem Anteil von 0,5 bis 99 Gew.-%,
C) mindestens ein Polyarylensulfid in einem Anteil von 0,1 bis 10 Gew.-% und
D) gegebenenfalls übliche Additive
wobei die Summe der Komponenten A) bis C) stets 100 Gew.-% beträgt.

Die Erfindung betrifft ebenfalls die Verwendung der erfindungsgemäßen Formteile.

Es wurde gefunden, daß der Zusatz geringer Mengen an Polyarylensulfiden zu Mischungen aus Fluorpolymeren und oxidierten Polyarylensulfiden das Ausgasen der oxidierten Polyarylensulfide reduziert und infolgedessen die hergestellten Formteile nicht reißen.

Unter Fluorpolymeren A) werden Polymere verstanden, die mindestens ein Fluoratom enthalten. Diese sind wohlbekannt und werden beispielsweise beschrieben in Ullmann's Encyclopedia of Industrial Chemistry, 5. Auflage, VCH Verlagsgesellschaft mbH, Weinheim-New York 1992: Organische Fluorpolymere, Volume A11, S. 393-430, worauf Bezug genommen wird. Bevorzugt sind Polytetrafluorethylen und Copolymere aus Tetrafluorethylen und Perfluoralkoxy-Einheiten mit einem Anteil < 5%, vorzugsweise 1 %, d. h. sogenanntes modifiziertes PTFE.

Polyarylensulfide C) und deren Herstellung sind in Ullmann's Encyclopedia of Industrial Chemistry, Volume A21, B. Elvers, S. Hawkins und G. Schulz (Eds.), VCH Verlagsgesellschaft mbH, Weinheim-New York 1992, S. 463-472 beschrieben, worauf Bezug genommen wird. Bevorzugt ist Polyphenylensulfid.

Oxidierte Polyarylensulfide B) sind lineare und verzweigte Polyarylensulfide, deren Schwefelgruppen teilweise oder vollständig in Sulfoxid- und/oder Sulfongruppen überführt worden sind. Die Synthese von sulfongruppenhaltigen Polyarylensulfiden ist in Chimia 28(9), (1974) 567 beschrieben, worauf ebenfalls Bezug genommen wird. Oxidierte Polyarylensulfide und deren Herstellung werden beispielsweise in den deutschen Patentanmeldungen DE 43 14 737 und DE 43 14 738 beschrieben, worauf Bezug genommen wird. Bei den oxidierten Polyarylensulfiden handelt es sich beispielsweise um Polyarylensulfone, Polyarylensulfid-sulfoxid-sulfone, Polyarylensulfoxidsulfone und Polyarylensulfidsulfone. Geeignet sind oxidierte Polyarylensulfide, bei denen mindestens 10%, bevorzugt mindestens 30% und insbesondere mindestens 60% der Schwefelbrücken in Sulfonbrücken umgewandelt sind.

Die mittlere Teilchengröße der oxidierten Polyarylensulfide B) wie auch der Polyarylensulfide C) liegt im allgemeinen im Bereich von 0,3 bis 500 µm, vorzugsweise 1 bis 100 µm und insbesondere 5 bis 50 µm.

Es ist günstig, das zum Einsatz kommende oxidierte Polyarylensulfid B) sowie das Polyarylensulfid C) vor dem Mischen mit den anderen Komponenten zu tempem, gegebenenfalls unter Stickstoff, um leicht flüchtige Anteile aus dem Substanzen zu entfernen. Für die Komponenten B) ist ein Temperaturbereich von 300 bis 450°C, vorzugsweise 260 bis 420°C und eine Temperzeit von 15 Minuten bis 24 Stunden, vorzugsweise 30 Minuten bis 6 Stunden zu empfehlen, für die Komponente C) eine Temperatur von 150 bis 200°C und eine Zeit von 1 Stunde bis 5 Stunden.

Die Polymermischungen können übliche Additive D) enthalten, wie thermische Stabilisatoren, UV-Stabilisatoren, Antistatika, Flammschutzmittel, Farbstoffe, Pigmente, anorganische und/oder organische Füllstoffe sowie Gleitmittelzusätze wie Molybdändisulfid oder Graphit.

Der Anteil an Fluorpolymeren beträgt 0,5 bis 99 Gew.-%, vorzugsweise 10 bis 98 Gew.-% und insbesondere 30 bis 95 Gew.-%; der Anteil an oxidierten Polyarylensulfiden beträgt 0,5 bis 99 Gew.-%, vorzugsweise 2 bis 90 Gew.-% und insbesondere 5 bis 70 Gew.-%; der Anteil an Polyarylensulfiden beträgt 0,1 bis 10 Gew.-%, vorzugsweise 1 bis 10 Gew.-% und insbesondere 2 bis 7,5 Gew.-%, wobei sich die Anteile der einzelnen Mischungsbestandteile, bezogen auf die Gesamtpolymer-Mischung A) bis C), auf 100% ergänzen.

Die Herstellung und Verarbeitung der Mischungen ist abhängig von der Verarbeitbarkeit der verwendeten Fluorpolymeren.
Sind diese thermoplastisch verarbeitbar, so werden die Mischungen z.B. durch Kneten, Blasformen, Extrusion, Heißpressen oder Spritzguß verarbeitet. Sind Sie dagegen nicht thermoplastisch verarbeitbar, finden Standardmethoden wie Transfer-Moulding, Ramextrusion, Heißpressen, Kaltpressen mit anschließendem Sintervorgang Anwendung.

Formteile, Folien, Fasern und Schälfolien, hergestellt aus diesen Mischungen sind geeignet beispielsweise als Lagerwerkstoffe und Dichtungen, da sie geringen Abrieb, niedrige Kriechneigung und sehr hohe Chemikalienbeständigkeit aufweisen. Sie finden verstärkt Anwendung in der Halbleiterindustrie beispielsweise als Leiterplatten, Chipträger und sonstige Formteile, die verbesserte Metallisierbarkeit, gute elektrische Eigenschaftswerte und sehr gute Chemikalienbeständigkeit besitzen.

### Beispiele:

### Beispiel 1: Herstellung von Polyphenylensulfon (PPSO₂)

63 kg Polyphenylensulfid-Pulver (d₅₀-Wert: 20 µm) mit einer Glasübergangstemperatur (Tg) von 94°C und einem Schmelzpunkt (Tm) von 290°C wurden in 219 l Eisessig bei 50°C vorgelegt, 1,2 l konz. Schwefelsäure zugegeben und 91 kg Wasserstoffperoxid (50%) über 3 Stunden zugetropft, wobei sich die Temperatur auf 60-65°C erhöhte. Nach einer Nachrührzeit von 2 Stunden bei 65°C wurde die Reaktionslösung abgekühlt, bei 50°C abgesaugt, mit Wasser gewaschen und getrocknet.
Ausbeute: 70 kg, DSC-Daten: Tg: 352°C, Tm: 520°C (Zersetzung)
Elementaranalyse: (C₆H₄SO₂)n
C: 55,6%, H: 3,2%, S: 24,6%, O: 16,0%.
Dies entspricht einem Schwefeloxidationsgrad im Polymer von etwa 65%.

In den nachstehenden Beispielen 2 bis 5 wurde dieses PPSO₂ aus Beispiel 1 sowie folgende Polymere verwendet:
®Fortron 0205 B4/20, d. h. ein Polyphenylensulfid PPS (Produktform: Pulver mit einem mittleren Teilchendurchmesser von ca. 20 µm) der Hoechst AG, Frankfurt a. M., Deutschland. Produkteigenschaften und Verarbeitungshinweise sind im Datenblatt "Fortron" der Hoechst AG dokumentiert.
®Hostaflon TF 1750, ein Polytetrafluorethylen PTFE.(Produktform: Pulver) und Hostaflon TFM 1700, ein modifiziertes Polytetrafluorethylen PTFE (Produktform: Pulver) der Hoechst AG, Frankfurt a.M., Deutschland. Produkteigenschaften und Verarbeitungshinweise sind im Datenblatt "Hostaflon" der Hoechst AG dokumentiert.

### Beispiel 2:

Eine Mischung bestehend aus 70 Gew.-% PTFE (Hostaflon TF 1750), 25 Gew.-% PPSO₂ gemäß Beispiel 1 und 5 Gew.-% PPS (Fortron 0205 B4/20), wurde bei Raumtemperatur in einem handelsüblichen Labormischer, der für das Mischen von Kunststoffpulvern geeignet ist, 12 Minuten lang vermischt.

Vor dem Mischen wurde das PPSO₂ bei 380°C 2 Stunden lang und das PPS bei 170°C 3 Stunden lang getempert.

3 kg der Mischung wurden anschließend folgendermaßen heiß verpreßt:

Als Preßform wurde ein Hohlzylinder aus VA-Stahl mit einem Innendurchmesser von 250 mm, einer Höhe von 100 mm und einer Wandstärke von 20 mm und als Preßstempel Messingscheiben verwendet. Der Spalt zwischen Preßstempel und Hohlzylinder betrug < 0,2 mm. Größere Spalte sind nicht geeignet. Die Mischung wurde in den Hohlzylinder gefüllt und anschließend die gesamte Preßform in eine kalte Vakuumpresse gegeben und 1 Minute lang einem verminderten Druck von 10 mbar ausgesetzt. Anschließend wurde die mit der Mischung gefüllte Form einem Preßdruck von 6 N/cm² ausgesetzt und die Temperatur mit einer Heizrate von 2 K/min auf 300°C erhöht. Diese Temperatur wurde 2 Stunden lang gehalten. Danach wurde der Druck auf 400 N/cm² erhöht und die Temperatur mit einer Heizrate von 2 K/min auf 365°C erhöht. Nach einer weiteren Haltezeit von 4 Stunden wurde die mit der Mischung gefüllte Form unter Beibehaltung des Drucks von 400 N/cm² mit einer Kühlrate von 1 K/min auf 20°C abgekühlt. Anschließend wurde die Form vom Druck entlastet und der Preßling entformt.

Auf den Haltevorgang bei 300°C kann bei kleinen Formteilen verzichtet werden.

Bei der Presse handelt es sich um eine sogenannte "Heißvakuumpresse" bei der der gesamte Preßraum evakuiert werden kann. Die Preßplatten sind mit Heizpatronen und Kühlkanälen versehen. Die Kühlung erfolgt mittels Preßluft. Der verminderte Druck besitzt den Festwert 10 mbar.

Die Heiz- und Kühlgeschwindigkeiten sowie der verminderte Druck werden von den Möglichkeiten der Presse vorgegeben. Variationen bezüglich der Geschwindigkeiten sind in einem weiten Bereich möglich. Es ist auch möglich, andere Materialien als VA-Stahl und Messing für die Preßform zu verwenden.

Die erhaltene Mischung ließ sich problemlos verarbeiten. Ausgasen wurde nicht bemerkt. Der erhaltene Preßling war rißfrei und ließ sich ohne Probleme spanend weiterverarbeiten.

### Vergleichsbeispiel 1:

Eine Mischung bestehend aus 75 Gew.-% PTFE und 25% Gew.-% PPSO₂, jeweils wie in Beispiel 2, wurde unter gleichen Bedingungen wie in Beispiel 2 gemischt und heiß verpreßt.

Die Mischung gemäß dem Vergleich gaste während des Heißpreßvorgangs stark aus. Der erhaltene Preßling wies mehrere Risse auf und konnte nicht spanend weiterverarbeitet werden.

### Beispiel 3:

Eine Mischung bestehend aus 70 Gew.-% modifiziertem PTFE (Hostaflon TFM 1700), 25 Gew.-% PPSO₂ aus Beispiel 1 und 5 Gew.-% PPS wurde unter gleichen Bedingungen wie in Beispiel 2 gemischt und heiß verpreßt.

Die Mischung ließ sich problemlos verarbeiten. Ausgasen wurde nicht bemerkt. Der erhaltene Preßling war rißfrei und ließ sich ohne Probleme spanend weiterverarbeiten.

### Vergleichsbeispiel 2:

Eine Mischung bestehend aus 75 Gew.-% modifiziertem PTFE und 25% Gew.-% PPSO₂, jeweils wie in Beispiel 3, wurde unter gleichen Bedingungen wie in Beispiel 2 gemischt und heiß verpreßt.
Die Mischung gemäß dem Vergleich 2 gaste während des Heißpreßvorgangs stark aus. Der erhaltene Preßling wies mehrere Risse auf und konnte nicht spanend weiterverarbeitet werden.

### Beispiel 4:

Eine Mischung bestehend aus 30 Gew.-% PTFE (Hostaflon TF 1750), 65 Gew.-% PPSO₂ und 5 Gew.-% PPS, jeweils wie in Beispiel 2, wurde unter gleichen Bedingungen wie in Beispiel 2 gemischt und heiß verpreßt.

Die Mischung gemäß Beispiel 4 ließ sich problemlos verarbeiten. Ausgasen wurde nicht bemerkt. Der erhaltene Preßling war rißfrei und ließ sich ohne Probleme spanend weiterverarbeiten.

### Vergleichsbeispiel 3:

Eine Mischung bestehend aus 35 Gew.-% PTFE und 65% Gew.-% PPSO₂, jeweils wie in Beispiel 4, wurde unter gleichen Bedingungen wie in Beispiel 2 gemischt und heiß verpreßt.

Die Mischung gemäß dem Vergleich gaste während des Heißpreßvorgangs stark aus. Der erhaltene Preßling wies mehrere Risse auf und konnte nicht spanend weiterverarbeitet werden.

### Beispiel 5:

Beispiel 2 wurde variiert durch Einsatz folgender Mengen: 74 Gew.-% PTFE, 25 Gew.-% PPSO₂ und 1 Gew.-% PPS, jeweils wie in Beispiel 2.

Das Ergebnis glich dem des Beispiels 2.

## Patentansprüche

1. Verfahren zur Herstellung rissfreier Formkörper aus einer Polymermischung, enthaltend
A) mindestens ein Fluorpolymer in einem Anteil von 0,5 bis 99 Gew.-%,
B) mindestens ein oxidiertes Polyarylensulfid in einem Anteil von 0,5 bis 99 Gew.-%,
C) mindestens ein Polyarylensulfid in einen Anteil von 0,1 bis 10 Gew.-% und
D) gegebenenfalls übliche Additive,
wobei die Summe der Komponenten A) bis C) stets 100 Gew.-% beträgt, **dadurch gekennzeichnet, dass** Komponente C) in einer Menge eingesetzt wird (0,1 bis 10 Gew.-%), die während der Verarbeitung der Polymermischung nicht zu Ausgasungen der oxidierten Polyarylensulfide führt.

2. Verfahren nach Anspruch 1, **dadurch gekennzeichnet, daß** die Mischung die Komponente A) in einer Menge von 10 bis 98 Gew.-%, insbesondere von 30 bis 95 Gew.-%, die Komponente B) in einer Menge von 2 bis 90 Gew.-%, insbesondere 5 bis 70 Gew.-%, und die Komponente C) in einer. Menge von 1 bis 10 Gew-%, insbesondere 2 bis 7,5 Gew.-%, enthält.

3. Verfahren nach Anspruch 1 oder 2, **dadurch gekennzeichnet, daß** die mittlere Teilchengröße der Komponenten B) und C) im Bereich von 0,3 bis 500 µm, vorzugsweise 1 bis 100 µm, insbesondere 5 bis 50 µm, liegt.

4. Verfahren nach einem oder mehreren der Ansprüche 1 bis 3, **dadurch gekennzeichnet, daß** als Polyarylensulfid C) Polyphenylensulfid eingesetzt wird.

5. Verfahren nach einem oder mehreren der Ansprüche 1 bis 4, **dadurch gekennzeichnet, daß** als Komponente B) Polyarylensulfone, Polyarylensulfid-sulfoxid-sulfone, Polyarylensulfoxid-sulfone und Polyarylensulfid-sulfone eingesetzt werden.

6. Verfahren nach einem oder mehreren der Ansprüche 1 bis 5, **dadurch gekennzeichnet, daß** als Komponente B) oxidiertes Polyarylensulfid eingesetzt wird, bei dem mindestens 10 %, vorzugsweise mindestens 30 %, insbesondere mindestens 60 %, der Sulfid-Brücken in Sulfonbrücken umgewandelt sind.

7. Verfahren nach einem oder mehreren der Ansprüche 1 bis 6, **dadurch gekennzeichnet, daß** als übliche Additive D) thermische Stabilisatoren, UV-Stabilisatoren, Antistatika, Flammschutzmittel, Farbstoffe, Pigmente, anorganische und organische Füllstoffe und/oder Gleitmittelzusätze eingesetzt werden.

8. Formteile, Folien, Fasern und Schälfolien hergestellt nach einem oder mehreren der Ansprüche 1 bis 7.

9. Verwendung der Formteile, Folien, Fasern und Schälfolien nach Anspruch 8 als Lagerwerkstoffe, Dichtungen, Leiterplatten, Chipträger und in sonstigen Anwendungen, wo verbesserte Metallisierbarkeit, gute elektrische Eigenschaftswerte und sehr gute Chemikalienbeständigkeit erforderlich sind.

## Claims

1. A process for producing moldings which are free of cracks from a polymer blend containing
A) at least one fluorine polymer in an amount of from 0.5 to 99% by weight,
B) at least one oxidized polyarylene sulfide in an amount of from 0.5 to 99% by weight,
C) at least one polyarylene sulfide in an amount of from 0.1 to 10% by weight and
D) if required, conventional additives,
the sum of the components A) to C) always being 100% by weight, wherein component C) is used in an amount (from 0.1 to 10% by weight) which does not lead tc expulsion of the oxidized polyarylene sulfides during processing of the polymer blend.

2. The process as claimed in claim 1, wherein the blend contains the component A) in an amount of from 10 tc 98% by weight, in particular from 30 to 95% by weight, the component B) in an amount of from 2 to 90% by weight, in particular from 5 to 70% by weight, and the component C) in an amount cf from 1 to 10% by weight, in particular from 2 to 7.5% by weight.

3. The process as claimed in claim 1 or 2, wherein the mean particle size of the components B) and C) is in the range from 0.3 to 500 µm, preferably from 1 to 100 µm, in particular from 5 to 50 µm.

4. The process as claimed in one or more of claims 1 to 3, wherein the polyarylene sulfide C) used is polyphenylene sulfide.

5. The process as claimed in one or more of claims 1 to 4, wherein polyarylene sulfones, polyarylene sulfide sulfoxide sulfones, polyarylene sulfoxide sulfones and polyarylene sulfide sulfones are used as component B).

6. The process as claimed in one or more of claims 1 to 5, wherein, as component B), oxidized polyarylene sulfide is used in which at least 10%, preferably at least 30%, in particular at least 60%, of the sulfide bridges have been converted into sulfonyl bridges.

7. The process as claimed in one or more of claims 1 to 6, wherein heat stabilizers, UV stabilizers, antistatic agents, flameproofing agents, dyes, pigments, inorganic and organic fillers and/or lubricant additives are used as conventional additives D).

8. A shaped article, film, fiber or peel film produced as claimed in one or more of claims 1 to 7.

9. The use of the shaped article, film, fiber or peel film as claimed in claim 8 as bearing materials, seals, circuit boards, chip carriers and in other applications in which improved metallizability, good electrical properties and very good resistance to chemicals are necessary.

## Revendications

1. Procédé de fabrication de corps de forme exempts de fissures, faits à partir d'un mélange de polymères, comprenant
A) au moins un fluoropolymère dans une proportion de 0,5 à 99% en poids,
B) au moins un sulfure de polyarylène oxydé dans une proportion de 0,5 à 99% en poids,
C) au moins un sulfure de polyarylène dans une proportion de 0,1 à 10% en poids et
D) le cas échéant, des additifs usuels,
la somme des composants A) à C) étant toujours de 100% en poids, **caractérisé en ce que** le composant C) est utilisé (0,1 à 10% en poids) dans une quantité qui ne conduit pas, pendant la mise en oeuvre du mélange de polymères, à des dégazages de sulfures de polyarylène oxydés.

2. Procédé selon la revendication 1, **caractérisé en ce que** le mélange contient le composant A) dans une quantité de 10 à 98% en poids, en particulier de 30 à 95% en poids, le composant B) dans une quantité de 2 à 90% en poids, en particulier de 5 à 70% en poids et le composant C) dans une quantité de 1 à 10% en poids, en particulier de 2 à 7,5% en poids.

3. Procédé selon la revendication 1 ou 2, **caractérisé en ce que** la grosseur moyenne des particules des composants B) et C) se situe dans le domaine de 0,3 à 500 µm, de préférence, de 1 à 100 µm, en particulier de 5 à 50 µm.

4. Procédé selon l'une quelconque ou plusieurs des revendications 1 à 3, **caractérisé en ce que** l'on utilise en tant que sulfure de polyarylène C), le sulfure de polyphénylène.

5. Procédé selon l'une quelconque ou plusieurs des revendications 1 à 4, **caractérisé en ce que** l'on utilise, en tant que composant B), le sulfone de polyarylène, le sulfone-sulfoxyde-sulfure de polyarylène, le sulfone-sulfoxyde de polyarylène et le sulfone-sulfure de polyarylène.

6. Procédé selon l'une quelconque ou plusieurs des revendications 1 à 5, **caractérisé en ce que** l'on utilise, en tant que composant B), du sulfure de polyarylène oxydé, dans le cas duquel au moins 10%, de préférence, au moins 30%, en particulier au moins 60% des ponts sulfure sont convertis en ponts sulfone.

7. Procédé selon l'une quelconque ou plusieurs des revendications 1 à 6, **caractérisé en ce que** l'on utilise, en tant qu'additifs usuels D), des agents de stabilisation thermique, des agents de stabilisation vis-à-vis des rayons UV, des agents antistatiques, des agents ignifuges, des colorants, des pigments, des charges inorganiques et organiques et/ou des lubrifiants.

8. Pièces de forme, feuilles, fibres et feuilles minces tranchées selon l'une quelconque ou plusieurs des revendications 1 à 7.

9. Utilisation des pièces de forme, feuilles, fibres et feuilles minces tranchées selon la revendication 8, en tant que matériaux pour stockage, joints d'étanchéité, cartes à circuits imprimés, supports à puces électroniques et dans des applications diverses où une capacité de métallisation améliorée, des bonnes valeurs de propriétés électriques et une très bonne résistance aux produits chimiques sont nécessaires.
